# EUROPEAN PATENT SPECIFICATION

(11) **EP 2 170 782 B1**
(45) Date of publication and mention of the grant of the patent: **10.02.2016**
(21) Application number: 08784937.8
(22) Date of filing: 22.07.2008
(51) Int. Cl.: C04B 28/02, C04B 20/10, C04B 103/30

(54) **METHODS AND COMPOSITIONS FOR IMPROVING AIR ENTRAINMENT IN CEMENTITIOUS MIXTURES**
VERFAHREN UND ZUSAMMENSETZUNGEN ZUR VERBESSERUNG DER LUFTPORENBILDUNG IN ZEMENTMISCHUNGEN
PROCÉDÉS ET COMPOSITIONS POUR AMÉLIORER L'ENTRAÎNEMENT DE L'AIR DANS DES MÉLANGES CIMENTAIRES

(30) Priority: 31.07.2007 US 962709 P; 23.04.2008 US 107797
(43) Date of publication of application: 07.04.2010
(73) Proprietor: Cognis IP Management GmbH, 40589 Düsseldorf (DE)
(72) Inventor: WHITE, Charles, M., Cincinnati, OH 45248 (US); OESTER, Dean, Cincinnati, OH 45236 (US); PRITT, Gary, West Chester, OH 45069 (US)
(74) Representative: Gastner, Thomas
(86) International application number: PCT/EP2008/005972
(87) International publication number: WO 2009/015800

(56) References cited:
- WO-A-2004/035943
- WO-A-2006/134080
- DE-U1- 20 304 239
- JP-A- 10 226 550
- US-A- 4 157 998
- US-A1- 2005 092 209

## Description

### Field of the invention

The invention relates generally to concrete additives, and more particularly, to methods and compositions for improving air entrainment in cementitious mixtures.

### Background of the invention

There is a growing demand for concrete in building and construction applications. The entrainment of air in cementitious materials, for example, Portland cement, concrete, mortar, and grout, is beneficial for providing resistance to cracking when the materials are subjected to cyclic changes in temperature conditions,

Air entrainment agents (AEA) may be added to cement based mixtures to entrain microscopic voids of air in the mixture. The voids may measure from 10 microns to 250 microns in diameter. The presence of the voids is believed to alleviate internal stresses caused when moisture freezes within pores inherently formed during setting of the cement. In harsh weather locales where an air entrainment agent is needed, there may be up to ten percent (10%), by volume of the cement, of air entrained within the voids. It should be understood that as air content increases, the compressive strength of the cementitious materials is lessened.

The demands of industry require that concrete be of sufficient strength and durability. The addition of the air entraining agents results in an improved durability as the result of entrained air voids. The voids may be stabilized by the action of the surfactant-based air entraining agents, and the voids help to relieve the expansive forces encountered when water freezes within the void.

JP 10 226550 describes an additive composition for cement capable of easily regulating the amount of air entrained in the case of use in a dry cement blend such as premixed mortar and having high strength exhibiting property at the time of curing by absorbing a specified polyoxyalkylene compound in fine porous silica powder.

US2005092209 discloses a lime-free admixture compositions comprising a combination of emulsifiers, toughening resins/plasticizers, adhesive resins, pumping aids for providing lubrication, rheology controllers, water retention agents, water repellants/overcoat finishes, accelerators, liquid adsorbents/water reducers and air entraining agents. The ingredients of the lime-free admixture compositions have specific purposes that lead to optimized properties when used in combination with a binder comprising hydraulic cement.

A need remains for a method for improving air entrainment for cementitious mixtures and concrete.

### Detailed description of the invention

The present invention refers to a new method for improving air entrainment, comprising the steps of:
(i) providing a compound (a) selected from the group consisting of an amphoteric, an alkyl polyglycoside, an optionally alkoxylated triglyceride, a triglyceride derivative, a fatty alcohol, an alkoxylated fatty alcohol, an alkoxylated polyhydric fatty alcohol, and mixtures thereof;
(ii) dispersing the compound (a) on a particulate carrier to form a treated carrier; and
(iii) adding the treated carrier to a cementitious mixture that includes an air entrainment agent.

Surprisingly it has been observed that treating a finely particulate carrier with at least one of the compounds according to an aspect of the invention improves the distribution of air voids in concrete. It has been found that the substantially evenly dispersed air voids formed in concrete according to the methods of the invention and the use of a treated carrier in conjunction with an air entrainment agent improve the distribution (spacing factor) and size of the air voids (specific surface area).

### Amphoterics

Amphoteric and/or zwitterionic surfactants can be divided into several groups, like alkyl betaines, alkylamido betaines, imidazolins and amphoglycinates.

Alkyl betaines are known surfactants which are mainly produced by carboxyalkylation, preferably carboxymethylation, of amine compounds. The starting materials are preferably condensed with halocarboxylic acids or salts thereof, more particularly sodium chloroacetate, one mole of salt being formed per mole of betaine. The addition of unsaturated carboxylic acids, such as acrylic acid for example, is also possible. Examples of suitable betaines are the carboxyalkylation products of secondary and, in particular, tertiary amines which correspond to formula (I): 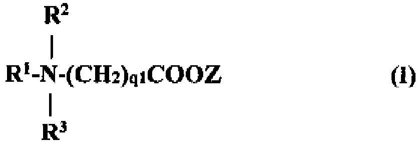 where R¹ is a an alkyl radical having 6 to 22 carbon atoms, R² is hydrogen or an alkyl group containing 1 to 4 carbon atoms, R³ is an alkyl group containing 1 to 4 carbon atoms, q1 is a number of 1 to 6 and X is an alkali and/or alkaline earth metal or ammonium. Typical examples are the carboxymethylation products of hexylmethylamine, hexyldimethylamine, octyldimethylamine, decyldimethylamine, C_{12/14}-cocoalkyldimethylamine, myristyldimethylamine, cetyldimethylamine, stearyldimethylamine, stearylethylmethylamine, oleyldimethylamine, C_{16/18}-tallowalkyldimethylamine and their technical mixtures, and particularly dodecyl methylamine, dodecyl dimethylamine, dodecyl ethylmethylamine and technical mixtures thereof. The commercially available products include Dehyton^{®} AB (Cognis Deutschland GmbH & Co., KG)

Alkyl amido betaines are the carboxyalkylation products of amidoamines which correspond to formula (II): 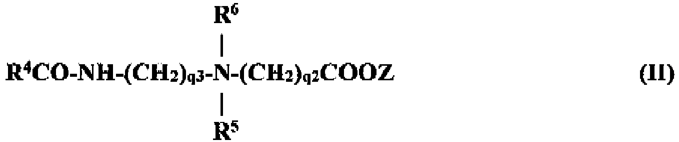 in which R⁴CO is an aliphatic acyl radical having 6 to 22 carbon atoms and 0 or 1 to 3 double bonds, R⁵ is hydrogen or an alkyl radical having 1 to 4 carbon atoms, R⁶ is an alkyl radical having 1 to 4 carbon atoms, q2 is a number from 1 to 6, q3 is a number from 1 to 3 and Z is an alkali and/or alkaline earth metal or ammonium. Typical examples are reaction products of fatty acids having 6 to 22 carbon atoms, like for example caproic acid, caprylic acid, caprinic acid, lauric acid, myristic acid, palmitic acid, palmoleic acid, stearic acid, isostearic acid, oleic acid, elaidic acid, petroselinic acid, linolic acid linoleic acid, elaeostearic acid, arachidonic acid, gadoleic acid, behenic acid, erucic acid and their technical mixtures with N,N-dimethylaminoethylamine, N,N-dimethylaminopropylamine, N,N-diethylaminoethylamine und N,N-diethylaminopropylamine, which are condensed with sodium chloroacetate. The commercially available products include Dehyton^{®} K and Dehyton^{®} PK (Cognis GmbH) as well as Tego^{®}Betaine (Goldschmidt).

Other suitable starting materials for the betaines to be used for the purposes of the invention are imidazolines. These substances are also known and may be obtained, for example, by cyclizing condensation of 1 or 2 moles of C₆-C₂₂ fatty acids with polyfunctional amines, such as for example aminoethyl ethanolamine (AEEA) or diethylenetriamine. The corresponding carboxyalkylation products are mixtures of different open-chain betaines. Typical examples are condensation products of the above- mentioned fatty acids with AEEA, preferably imidazolines based on lauric acid, which are subsequently betainised with sodium chloroacetate. The commercially available products include Dehyton^{®} G (Cognis Deutschland GmbH & Co., KG)

Betaines represent the preferred group of amphoteric surfactants. Among said betaines the product Dehyton^{®} K is the preferred one. Dehyton^{®} K is a cocoamide propyl betaine and is available from Cognis GmbH. Other suitable amphoteric compounds may also be used, including but not limited, to N-alkyl-N,N-dimethyl ammonium glycinates, for example cocoalkyl dimethyl ammonium glycinate, N-acylaminopropyl-N,N dimethyl ammonium glycinates, for example coco-acylaminopropyl dimethyl ammonium glycinate, and 2-alkyl-3-carboxymethyl-3-hydroxyethyl imidazolines containing 8 to 18 carbon atoms in the alkyl or acyl group and cocoacylaminoethyl hydroxyethyl carboxymethyl glycinate, such as Dehyton^{®} AB 30 coco betaine (CAS# 68424-94-2).

### Alkyl polyglycosides

The alkyl polyglycosides may be derived from aldoses or ketoses containing 5 or 6 carbon atoms, preferably glucose. Accordingly, the preferred alkyl and/or alkenyl oligoglycosides are alkyl or alkenyl oligo**glucosides**. The alkyl polyglycosides according to the invention correspond to formula **(III):**

**R⁷O[G]ₚ** **(III)**

wherein R⁷ is an alkyl or alkenyl radical having from 6 to 22 carbon atoms, G is a Sugar unit having 5 or 6 carbon atoms and p is a number from 1 to 10. The index p in general formula (**III**) indicates the degree of polymerisation (DP degree), i.e. the distribution of mono- and oligoglycosides, and is a number of 1 to 10. Whereas p in a given compound must always be an integer and, above all, may assume a value of 1 to 6, the value p for a certain alkyl oligoglycoside is an analytically determined calculated quantity which is mostly a broken number. Alkyl polyglycosides having an average degree of polymerisation p of 1.1 to 3.0 are preferably used. Alkyl polyglycosides having a degree of polymerisation below 1.7 and, more particularly, between 1.2 and 1.4 are preferred from the applicational point of view. The alkyl or alkenyl radical R⁷ may be derived from primary alcohols containing 4 to 22 and preferably 8 to 16 carbon atoms. Typical examples are butanol, caproic alcohol, caprylic alcohol, capric alcohol, undecyl alcohol, lauryl alcohol, myristyl alcohol, cetyl alcohol, palmitoleyl alcohol, stearyl alcohol, isostearyl alcohol, oleyl alcohol, elaidyl alcohol, petroselinyl alcohol, arachyl alcohol, gadoleyl alcohol, behenyl alcohol, erucyl alcohol and technical mixtures thereof such as are formed, for example, in the hydrogenation of technical fatty acid methyl esters or in the hydrogenation of aldehydes from Roelen's oxo synthesis. Alkyl polyglycosides based on hydrogenated C₈-C₁₆ coconut oil alcohol having a DP of 1 to 3 are preferred.

Suitable and preferred alkyl polyglycoside includes, but is not limited to, Agnique® PG 8107. Agnique® PC 8107 is a C₈-C₁₀ alkyl polyglucoside, with a degree of polymerization (D.P.) of 1.7 and is available from Cognis GmbH or Cognis Corporation. Other suitable alkyl polyglycosides may also be used, including Agnique® PG 8105, a C₈-C₁₀ alkyl polyglucoside, with a degree of polymerization (D.P.) of 1.5, Agnique® 9116, which is a C₉-C₁₁ alkyl polyglucoside with DP = 1.6, Agnique® PG 264, a C₁₂-C₁₆ alkyl polyglucoside with DP = 1.4, all of which are available from Cognis GmbH or Cognis Corporation.

### Triglycerides and their derivatives

Suitable and preferred triglycerides may include vegetable oils, including, but not limited to, The triglyceride may be a vegetable oil selected from the group consisting of rapeseed oil, soybean oil, sunflower oil, safflower oil, corn oil, cottonseed oil, linseed oil, coconut oil and tall oils, or may be of animal origin and selected from the group consisting of tallow, lards, chicken fat, and fish oil and mixtures thereof. Most preferred are triglycerides selected from the group consisting of rapeseed oil, soybean oil, coconut oil and tall oils.

Suitable and preferred triglyceride derivative includes, but is not limited to, an alkoxylated triglyceride, including an ethoxylated triglyceride. The degree of alkoxylation is in the range of 0-200 moles of at least one alkylene oxide selected from the group consisting of ethylene oxide, propylene oxide, butylene oxide, and combinations thereof per mole of triglyceride. Suitable ethoxylated triglycerides include, but are not limited to, Agnique^{®} SBO-5, Agnique^{®} SBO-10, Agnique^{®} SBO-20, Agnique^{®} CSO-16, Agnique^{®} CSO-25, Agnique^{®} RSO-5, Agnique^{®} RSO-10 and Agnique^{®} RSO-30.

### Fatty alcohols

Suitable and preferred fatty alcohol includes, but is not limited to, a fatty alcohol with an alkyl chain containing from 6 - 22 carbons or mixtures thereof. The alkyl chain may be either linear or branched or mixtures thereof. A suitable fatty alcohol includes a Cs alcohol, Lorol^{®} C8-98, from Cognis Corporation, a C₈₋₁₀ alcohol, Lorol^{®} C8-10SPV from Cognis Corporation, or a C₁₂₋₁₄ fatty alcohol, Lorol^{®} C12-14A from Cognis Corporation, or isostearyl alcohol.

### Alkoxylated fatty alcohols

Suitable and preferred alkoxylated fatty alcohol includes, but is not limited to, fatty alcohols with alkyl chains containing from 6-22 carbons or mixtures thereof. The fatty alcohol may be alkoxylated with from 0-200 moles of at least one alkylene oxide selected from the group consisting of ethylene oxide, propylene oxide, butylene oxide, and combinations thereof per mole of alcohol. For example, a suitable alkoxylated fatty alcohol may contain an average of about 5 moles of ethoxylate per mole of alcohol. Alternatively, a suitable alkoxylated fatty alcohol includes, but is not limited to, a C₆₋₁₂ alcohol with on average 5 moles of ethylene oxide and a C₁₆₋₁₈ fatty alcohol with, on average, 5 moles of ethylene oxide.

### Alkoxylated polyhydric fatty alcohols

Suitable and preferred alkoxylated polyhydric fatty alcohol includes, but is not limited to, ethylene glycol, diethylene glycol, triethylene glycol, 1,2-propylene glycol, polyoxypropylene glycols, 1,3-propylene glycol, 1,4-butylene glycol, pentane-1,5-diol, hexane-1,6-diol, hexane-1,2,6-triol, glycerol and bis-(4-hydroxycyclohexyl)-2,2-propane. The polyhydric alcohol may be, but is not limited to, dihydric, trihydric, tetrahydric and pentahydric alcohols, The polyhydric alcohol may be alkoxylated with 0-200 moles of at least one alkylene oxide selected from the group consisting of ethylene oxide, propylene oxide, butylene oxide, and combinations thereof per mole of alcohol. For example, a suitable alkoxylated polyhydric alcohol may contain an average of about 15 moles of ethoxylate and about 60 moles of propoxylate per mole of alcohol. It should be understood that when an alcohol is alkoxylated and includes at least 5 moles of EO, a distribution of ethoxylates will be present, ranging from 0 moles of EO, an average of 5 moles of EO and up to 10-14 moles of EO.

The compounds (a) described above may be used individually or in a mixture (composition). Typically, compound (a) is used in an amount ranging from about 0.01% to about 10% by weight of the compound on the carrier. In one aspect of the invention, a mixture of an alkyl polyglucoside and an amphoteric is provided in a ratio of 0.1% to 0.5%, and also in a ratio of 0.1% to 1.0%. In another preferred aspect of the invention, the triglyceride is blended with sodium lauryl sulfate, or an alkoxylated fatty alcohol.

### Carrier

Suitable carriers include ground limestone, but other organic and inorganic carrier particles may also be used in practicing the invention.

### Cementitious mixtures

The cementitious mixture may also include Portland cement, concrete, mortar and grout and/or an air entrainment agent, such as for example a vinsol resin. A suitable air entraining agent that may be used in conjunction with the treated carrier includes vinsol resin, available from Master Builders VR. Other suitable air entraining agents include fatty acid salts, such as MB Micro Air and Sika AEA-15, rosin soaps such as MIX AE90, and sulfonated lignin salts and other sulfonated air entraining agents. Generally, the particle size of the mixtures may range from 12.5 mm to 1.18 mm, from 600 microns to 75 microns, and may also be finer than 75 microns. It should be understood that there is typically a range in the size of particles, and that the invention is not limited to a specific particle size.

### Industrial application

Another object of the present invention refers to a composition for improving air entrainment, comprising a compound (a) selected from the group consisting of: an amphoteric, an alkyl polyglycoside, an optionally alkoxylated triglyceride, a triglyceride derivative, a fatty alcohol, an alkoxylated fatty alcohol, an alkoxylated polyhydric fatty alcohol, and mixtures thereof, wherein the compound (a) is dispersed on a particulate carrier and the intermediate thus obtained is added to a cementitious mixture that includes an air entrainment agent. Preferably, said composition is incorporated into a concrete structure.

Unless otherwise defined, all technical and scientific terms used herein have the same meaning as commonly understood by one of ordinary skill in the art to which the invention belongs. The materials, methods and examples are illustrative only and are not intended to be limiting.

### Examples 1 and 2

In the following Example, two concrete mixtures including Portland cement were prepared using conventional industry procedures. It is to be understood that the concrete mixture may be made in any suitable mixing device or by manual mixing. It is to be understood that although the tern "Portland cement" is used in the Examples, other types of cementitious mixtures may also be suitable.

One mixture included ground limestone treated with 5.7% by weight soybean oil, at a dosage rate of 4% by weight of the Portland cement in the mixture. The other mixture was a standard Portland cement mixture. The air entraining agent used in both concrete mixtures was vinsol resin, available from Master Builders VR. Samples of the hardened concrete were analyzed for air void analysis according to ASTM C-457. The details are compiled in Table 1:

**Table 1**

| Air entrainment examples | | |
|---|---|---|
| | **Portland Cement** | **Portland Cement with Treated limestone** |
| Total air content | 3.6 | 6.5 |
| Specific surface area (in²/in³) | 1,747 | 867 |
| Spacing factor (in) | 0.0031 | 0.0048 |

Based on the above, the use of a treated carrier in conjunction with an air entrainment agent improves the distribution (spacing factor) and size of the air voids (specific surface area). It is to be understood that the mixing devices and methods used can vary and are not limited to the devices and methods described herein, as a skilled artisan will appreciate. For example, treatment may be carried out using any method of efficiently dispersing the additive on the carrier surface, such as dry blending, nebulising, spraying, misting, or other suitable blending operations available to one skilled in the art. The invention has been described with reference to specific embodiments.

Benefits, other advantages, and solutions to problems have been described above with regard to specific embodiments. The benefits, advantages, solutions to problems and any element(s) that may cause any benefit, advantage, or solution to occur or become more pronounced are not to be construed as a critical, required, or essential feature or element of any or all of the claims.

## Claims

1. A method for improving air entrainment, comprising the steps of:
(i) providing a compound (a) selected from the group consisting of an amphoteric, an alkyl polyglycoside, an optionally alkoxylated triglyceride, a triglyceride derivative, a fatty alcohol, an alkoxylated fatty alcohol, an alkoxylated polyhydric fatty alcohol, and mixtures thereof;
(ii) dispersing the compound (a) on a particulate carrier to form a treated carrier; and
(iii) adding the treated carrier to a cementitious mixture that includes an air entrainment agent.

2. The method according to Claim 1, **characterised in that** said amphoteric is a betaine.

3. The method according to Claims 1 and/or 2, **characterised in that** said triglyceride is selected from the group consisting of rapeseed oil, soybean oil, coconut oil and tall oils.

4. The method according to any of the preceding Claims 1 to 3, **characterised in that** said carrier is limestone.

5. The method according to any of the preceding Claims 1 to 4, **characterised in that** said cementitious mixture includes Portland cement.

6. The method according to any of the preceding Claims 1 to 5, **characterised in that** said compound (a) is used in an amount ranging from about 0.01% to about 10% by weight of the compound on the carrier.

7. A composition for improving air entrainment, comprising a compound (a) selected from the group consisting of: an amphoteric, an alkyl polyglycoside, an optionally alkoxylated triglyceride, a triglyceride derivative, a fatty alcohol, an alkoxylated fatty alcohol, an alkoxylated polyhydric fatty alcohol, and mixtures thereof, wherein the compound (a) is dispersed on a particulate carrier and the intermediate thus obtained is added to a cementitious mixture that includes an air entrainment agent.

8. The composition according to Claim 7, incorporated into a concrete structure.

## Patentansprüche

1. Verfahren zur Verbesserung der Luftporenbildung, das folgende Schritte umfasst:
(i) Bereitstellen einer Verbindung (a) aus der Gruppe bestehend aus einer amphoteren Substanz, einem Alkylpolyglykosid, einem gegebenenfalls alkoxylierten Triglycerid, einem Triglyceridderivat, einem Fettalkohol, einem alkoxylierten Fettalkohol, einem alkoxylierten mehrwertigen Fettalkohol und Mischungen davon;
(ii) Verteilen der Verbindung (a) auf einem teilchenförmigen Träger zur Bildung eines behandelten Trägers und
(iii) Zugeben des behandelten Trägers zu einer zementären Mischung, die einen Luftporenbildner enthält.

2. Verfahren nach Anspruch 1, **dadurch gekennzeichnet, dass** es sich bei der amphoteren Substanz um ein Betain handelt.

3. Verfahren nach Anspruch 1 und/oder 2, **dadurch gekennzeichnet, dass** das Triglycerid aus der Gruppe bestehend aus Rapsöl, Sojaöl, Kokosnussöl und Tallölen ausgewählt ist.

4. Verfahren nach einem der vorhergehenden Ansprüche 1 bis 3, **dadurch gekennzeichnet, dass** es sich bei dem Träger um Kalkstein handelt.

5. Verfahren nach einem der vorhergehenden Ansprüche 1 bis 4, **dadurch gekennzeichnet, dass** die zementäre Mischung Portlandzement enthält.

6. Verfahren nach einem der vorhergehenden Ansprüche 1 bis 5, **dadurch gekennzeichnet, dass** die Verbindung (a) in einer Menge im Bereich von etwa 0,01 bis etwa 10 Gew.-% der Verbindung auf dem Träger verwendet wird.

7. Zusammensetzung zur Verbesserung der Luftporenbildung, umfassend eine Verbindung (a) aus der Gruppe bestehend aus einer amphoteren Substanz, einem Alkylpolyglykosid, einem gegebenenfalls alkoxylierten Triglycerid, einem Triglyceridderivat, einem Fettalkohol, einem alkoxylierten Fettalkohol, einem alkoxylierten mehrwertigen Fettalkohol und Mischungen davon, wobei die Verbindung (a) auf einem teilchenförmigen Träger verteilt wird und das so erhaltene Zwischenprodukt zu einer zementären Mischung, die einen Luftporenbildner enthält, gegeben wird.

8. Zusammensetzung nach Anspruch 7, eingearbeitet in eine Betonkonstruktion.

## Revendications

1. Procédé d'amélioration de l'entraînement de l'air, comprenant les étapes qui consistent à :
(i) fournir un composé (a) sélectionné dans le groupe constitué d'un composé amphotère, d'un alkylpolyglycoside, d'un triglycéride optionnellement alcoxylé, d'un dérivé de triglycéride, d'un alcool gras, d'un alcool gras alcoxylé, d'un alcool gras polyhydrique alcoxylé, et de mélanges de ceux-ci ;
(ii) disperser le composé (a) sur un support particulaire pour former un support traité ; et
(iii) ajouter le support traité à un mélange cimentaire qui contient un agent d'entraînement de l'air.

2. Procédé selon la revendication 1, **caractérisé en ce que** ledit composé amphotère est une bétaïne.

3. Procédé selon les revendications 1 et/ou 2, **caractérisé en ce que** ledit triglycéride est sélectionné dans le groupe constitué de l'huile de colza, de l'huile de soja, de l'huile de noix de coco et des tallols.

4. Procédé selon l'une quelconque des revendications précédentes 1 à 3, **caractérisé en ce que** ledit support est le calcaire.

5. Procédé selon l'une quelconque des revendications précédentes 1 à 4, **caractérisé en ce que** ledit mélange cimentaire comprend le ciment Portland.

6. Procédé selon l'une quelconque des revendications précédentes 1 à 5, **caractérisé en ce que** ledit composé (a) est utilisé dans une quantité d'environ 0,01 % à environ 10 % en poids du composé sur le support.

7. Composition d'amélioration de l'entraînement de l'air, comprenant un composé (a) sélectionné dans le groupe constitué d'un composé amphotère, d'un alkylpolyglycoside, d'un triglycéride optionnellement alcoxylé, d'un dérivé de triglycéride, d'un alcool gras, d'un alcool gras alcoxylé, d'un alcool gras polyhydrique alcoxylé, et de mélanges de ceux-ci, le composé (a) étant dispersé sur un support particulaire et le produit intermédiaire ainsi obtenu étant ajouté à un mélange cimentaire qui comprend un agent d'entraînement de l'air.

8. Composition selon la revendication 7, incorporée dans une structure en béton.
